(19) Europäisches Patentamt
European Patent Office
Office européen des brevets

(11) **EP 2 623 779 A2**

(12) **EUROPEAN PATENT APPLICATION**

(43) Date of publication:
**07.08.2013 Bulletin 2013/32**

(51) Int Cl.:
*F04B 1/04* [(2006.01)]  *F03D 11/02* [(2006.01)]
*F04B 1/053* [(2006.01)]  *F04B 1/06* [(2006.01)]
*F04B 7/00* [(2006.01)]  *F04B 49/06* [(2006.01)]
*F04B 49/22* [(2006.01)]

(21) Application number: **13152893.7**

(22) Date of filing: **28.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.01.2012 JP 2012018007**

(71) Applicant: **Mitsubishi Heavy Industries, Ltd.**
**Tokyo 108-8215 (JP)**

(72) Inventors:
• **Iwasaki, Satoshi**
  **TOKYO, 108-8215 (JP)**
• **Wakasa, Tsuyoshi**
  **TOKYO, 108-8215 (JP)**
• **Ichinose, Hidekazu**
  **TOKYO, 108-8215 (JP)**

(74) Representative: **Intès, Didier Gérard André et al**
  **Cabinet Beau de Loménie**
  **158, rue de l'Université**
  **75340 Paris Cedex 07 (FR)**

(54) **Piston controller, wind turbine generator, and piston control method**

(57)    A wind turbine generator (10) is provided with a cam, in which a plurality of peaks and valleys are alternately provided in the circumferential direction and which is connected to a rotor shaft (36), a hydraulic pump (32) that pumps working fluid by reciprocating motion of a plurality of pistons, which are disposed in a radiating pattern so as to contact the circumferential surface of cam, caused by rotation of the shaft (36), and a hydraulic motor (34) that rotates a shaft (42) of a generator (29) by reciprocating motion of a plurality of pistons caused by the working fluid. When the hydraulic pump (32) is driven by some of the pistons, a hydraulic control unit (66) virtually divides positions at which the pistons are disposed into a plurality of divided regions and determines positions of the pistons to be driven for each of the divided regions such that the pistons to be driven do not have fixed intervals.

FIG. 2

**Description**

{Technical Field}

The present invention relates to a piston controller, a wind turbine generator, and a piston control method.

{Background Art}

In recent years, a wind turbine generator that speeds up the rotation of a rotor provided with blades by means of a hydraulic pump and a hydraulic motor and transmits the rotation to a generator has been developed.
A rotor shaft, going towards the interior of a nacelle, is provided on a rotor, and a circular cam in which a plurality of peaks and valleys are alternately provided in the circumferential direction is connected to the end of the rotor shaft. The hydraulic pump is provided with a plurality of pistons disposed in a radiating pattern so as to contact the circumferential surface of the cam and pumps working fluid by reciprocating motion of the pistons caused by the rotation of the rotor shaft. In other words, when the pistons of the hydraulic pump contact the peaks of the cam, the pistons expel the working fluid out of cylinders, and when the pistons contact the valleys, the pistons suck the working fluid into the cylinders.
Thus, the working fluid is pumped into the individual cylinders configuring the hydraulic motor from the hydraulic pump via a manifold, whereby the pistons provided in the cylinders undergo reciprocating motion. Therefore, a shaft of a generator, which is connected to the pistons, is rotated to perform electric power generation in the generator.

By opening/closing valves that control flow of working fluid flowing into and out of the cylinders, the respective pistons provided in hydraulic pump can be selectively driven or stopped. In the case of full load, all of the pistons are driven. On the other hand, in the case of partial load where the rotational force of the rotor is small, the number of pistons to be driven is reduced.

In this case, if some of the pistons to be driven are disposed evenly (at fixed intervals), by driving mutually opposing pistons, for example, a resonance vibration having a period equal to the product of the number of pistons being driven and the rotational speed of the rotor is caused. For example, when four pistons are driven, the resonance vibration has a period of four times the rotational speed.

PTL 1 describes a technique for preventing whirling of a cylinder block for a piston pump/motor, which has a plurality of cylinder bores, within which respective pistons are allowed to slidably move, and which is capable of rotating integrally with a rotating shaft, by providing a weight for rotation balancing of the cylinder block. In other words, with the technique disclosed in PTL 1, the vibration eigenvalue of the cylinder block is changed with the weight, thereby preventing resonance vibration with the natural frequency during whirling of the cylinder block.

Citation List

Patent Literature

{Citation List}

{Patent Literature}

[PTL 1] Japanese Unexamined Patent Application, Publication No. 2006-299822

{Summary of Invention}

{Technical Problem}

However, the technique described in PTL 1, which prevents resonance vibration with the natural frequency by means of the weight, cannot prevent a resonance vibration that is caused by driving pistons disposed at fixed intervals when a hydraulic motor is driven at partial load.

The present invention has been conceived in light of the above-described circumstances, and an object thereof is to provide a piston controller, a wind turbine generator, and a piston control method that are capable of preventing the occurrence of a resonance vibration even when a hydraulic motor is driven by making working fluid flow in and out by means of some of the pistons.

{Solution to Problem}

In order to solve the problems described above, a piston controller, wind turbine generator, and piston control method of the present invention employ the following solutions.

A piston controller according to a first aspect of the present invention is a piston controller of a hydraulic driving device including a circular cam, in which a plurality of peaks and valleys are alternately provided in a circumferential direction and which is connected to a shaft and a hydraulic pump that pumps working fluid by a reciprocating motion of a plurality of pistons, which are disposed in a radiating pattern so as to contact the circumferential surface of the cam, caused by rotation of the shaft, wherein when the hydraulic pump is driven by means of some of the pistons, the piston controller virtually divides positions at which the pistons are disposed into a plurality of regions and determines positions of the pistons to be driven for each of the regions such that the pistons to be driven do not have fixed intervals.

According to this configuration, the rotational force of the shaft is transmitted as a pressure of the working fluid by the circular cam, in which a plurality of peaks and valleys are alternately provided in the circumferential direction and which is connected to the shaft and a hydraulic pump that pumps the working fluid by the reciprocating motion of a plurality of pistons, which are disposed in a radiating pattern so as to contact the circumferential surface of cam, caused by the rotation of the shaft.

When the hydraulic pump is driven under partial load, the working fluid is made flow in and out by some of the pistons. However, if some of the pistons to be driven are disposed evenly (at fixed intervals), a resonance vibration is produced, for example, by driving mutually opposing pistons.

Thus, when the hydraulic pump is driven by means of some of the pistons, the positions at which the pistons are disposed are virtually divided into a plurality of regions, and the pistons to be driven are determined for each of the regions such that the pistons to be driven do not have fixed intervals.

By doing so, because no pistons disposed with fixed intervals are driven in this configuration, it is possible to prevent the occurrence of a resonance vibration even when the hydraulic motor is driven by making the working fluid flow in and out by means of some of the pistons.

In the first aspect described above, the number of pistons to be driven and the number of regions may be the same.

According to this configuration, the number of types of variables used for determining the positions of the pistons to be driven is reduced, whereby it is possible to determine the positions of the pistons to be driven more easily.

In the first aspect described above, the positions of the pistons to be driven be determined respectively for preset rotational speeds of the shaft.

According to this configuration, even if the positions of the pistons to be driven are biased, the pistons to be driven are redetermined respectively for the preset rotational speeds of the shaft, whereby it is possible to eliminate the bias in the positions of the pistons to be driven. In addition, the lifetimes of the pistons are also equalized. Note that the positions of the pistons to be driven are preferably determined every revolution of the shaft.

In the first aspect described above, the positions of the pistons to be driven may be determined for each of the regions using a random number.

According to this configuration, the positions of the pistons to be driven can easily be determined for each of the regions.

In the first aspect described above, the positions of the pistons to be driven may be determined for each of the regions using a spreading code.

Two different spreading codes have orthogonality and have low mutual correlation. The spreading code includes, for example, a Gold code and an M-sequence code (also referred to as an M-sequence signal). Therefore, according to this configuration, the positions of the pistons to be driven are determined using the spreading codes having low mutual correlation, whereby it is possible to more reliably prevent the pistons to be driven from having fixed intervals.

A wind turbine generator according to a second aspect of the present invention is a wind turbine generator comprising a circular cam, in which a plurality of peaks and valleys are alternately provided in a circumferential direction and which is connected to a shaft of a rotor provided with blades; a hydraulic pump that pumps working fluid by a reciprocating motion of a plurality of pistons, which are disposed in a radiating pattern so as to contact the circumferential surface of the cam, caused by rotation of the shaft of the rotor; a hydraulic motor that rotates a shaft of a generator by a reciprocating motion of a plurality of pistons caused by the working fluid that has been from the hydraulic pump; and the piston controller mentioned above.

In this configuration, the hydraulic pump and the hydraulic motor speed up the rotation of the rotor and transmit the rotation to the generator. Thus, the wind turbine generator is operated under partial load, the hydraulic pump is driven by means of some of the pistons. In this case, the positions at which the pistons are disposed are virtually divided into a plurality of regions and the pistons to be driven are determined for each of the regions such that the pistons to be driven do not have fixed intervals, whereby this configuration can prevent the occurrence of a resonance vibration even when the hydraulic pump is driven under partial load.

In the second aspect, when the wind turbine generator is operated under partial load, the piston controller may virtually divide positions at which the piston provided in at least one of the hydraulic pump and the hydraulic motor are disposed into a plurality of regions and may determine positions of the pistons to be driven for each of the regions such that the pistons to be driven do not have fixed intervals.

In this configuration, even when at least one of the hydraulic pump and the hydraulic motor is driven under partial load, the occurrence of a resonance vibration can be prevented.

A piston control method according to a third aspect of the present invention is a piston control method of a hydraulic driving device including: a circular cam, in which a plurality of peaks and valleys are alternately provided in a circumferential direction and which is connected to a shaft and a hydraulic pump that pumps working fluid by a reciprocating motion of a plurality of pistons, which are disposed in a radiating pattern so as to contact the circumferential surface of the cam, caused by rotation of the shaft, wherein when the hydraulic pump is driven by means of some of the pistons, the piston control method virtually divides positions at which the piston are disposed into a plurality of regions and determines positions of the pistons to be driven for each of the regions such that the pistons to be driven do not have fixed intervals.

{Advantageous Effects of Invention}

According to the present invention, an excellent advantage is afforded in that, even when a hydraulic motor is driven by making working fluid flow in and out by means of some of the pistons, the occurrence of a resonance vibration is prevented.

{Brief Description of Drawings}

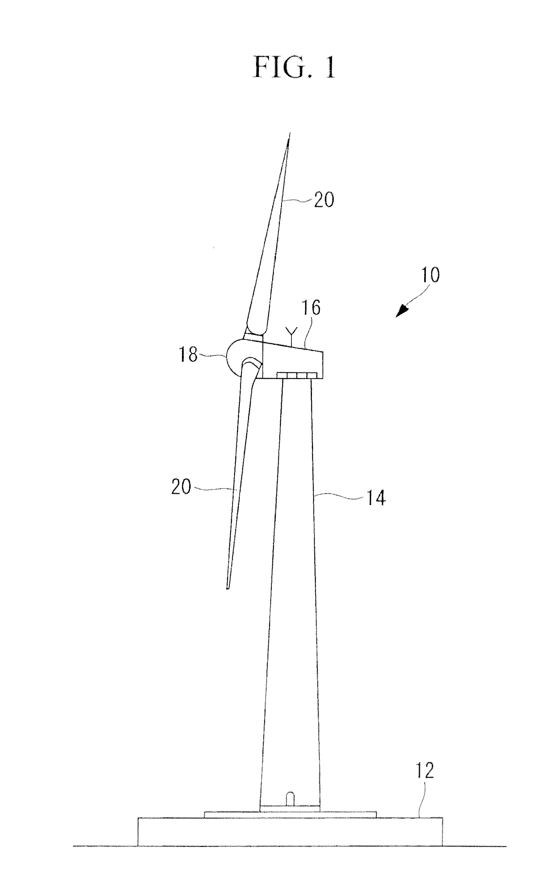

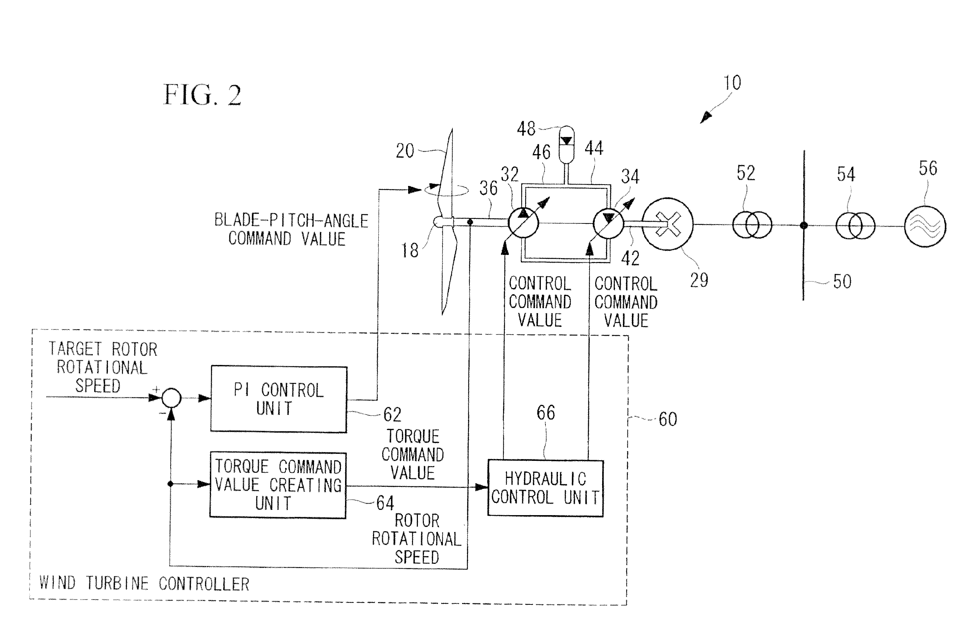

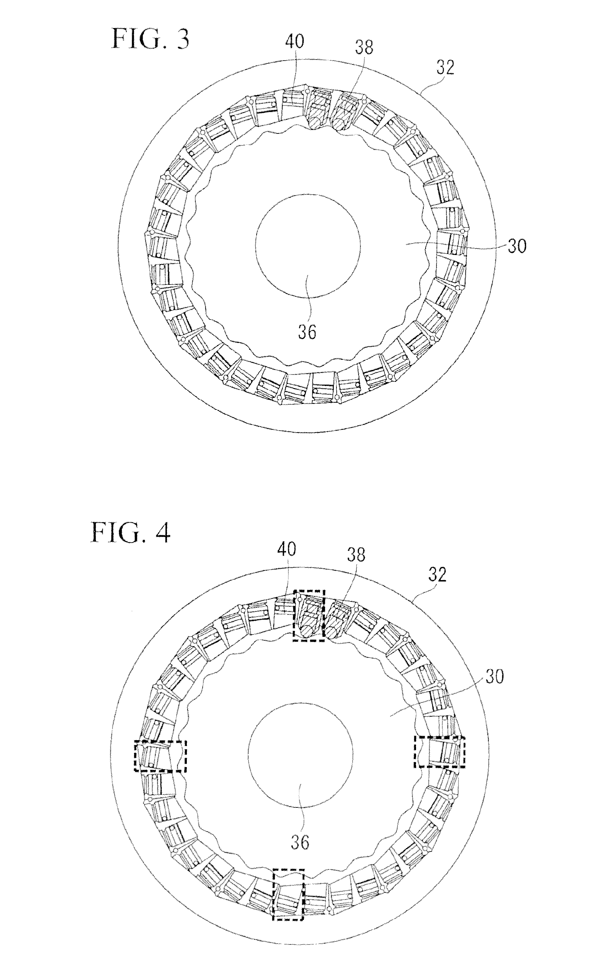

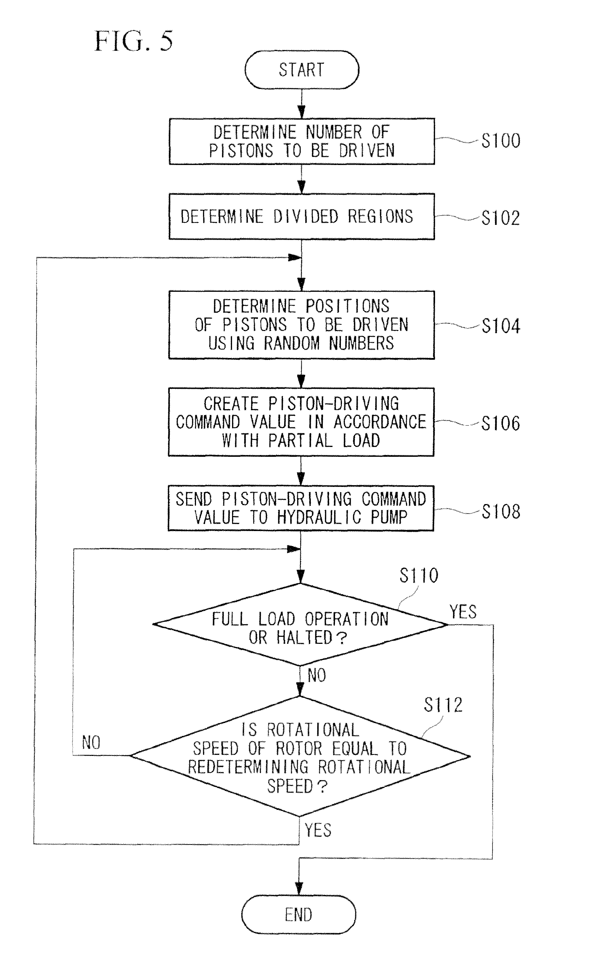

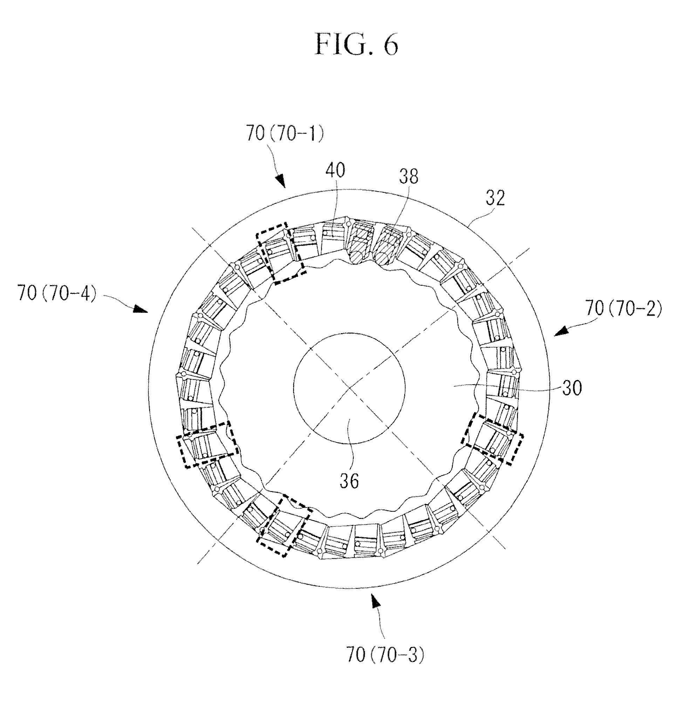

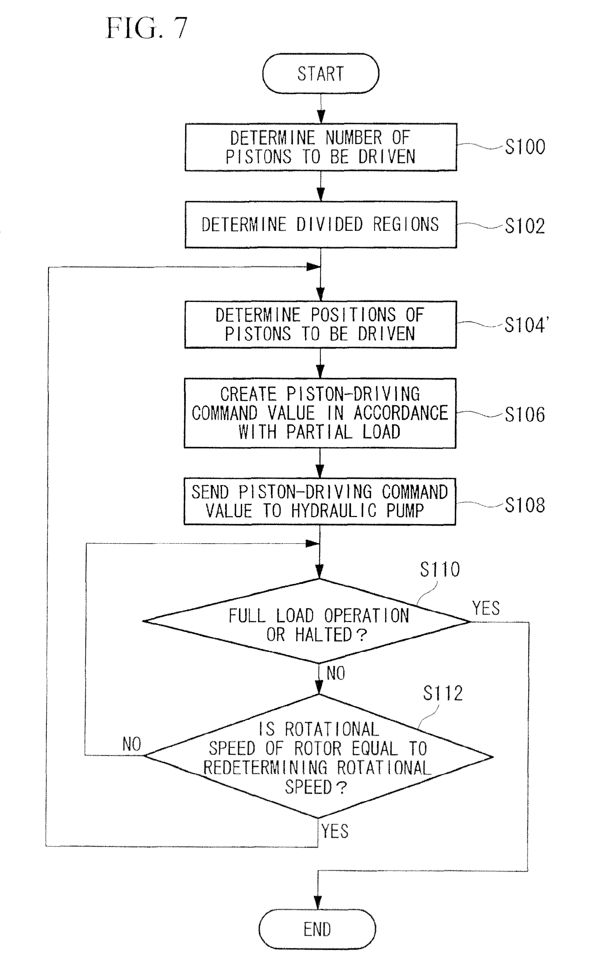

{Fig. 1} FIG. 1 is an external view of a wind turbine generator according to a first embodiment of the present invention.
{Fig. 2} FIG. 2 is a schematic view showing an electrical configuration of the wind turbine generator according to the first embodiment of the present invention and a configuration which speeds up the rotation of a rotor using hydraulic pressure and transmits the rotation to a asynchronous generator.
{Fig. 3} FIG. 3 is a configuration diagram of a hydraulic pump according to the first embodiment of the present invention.
{Fig. 4} FIG. 4 is a schematic view required for explaining the occurrence of a resonance vibration when a hydraulic pump is driven under partial load in a conventional manner. "Fig. 5} FIG. 5 is a flow chart showing a flow of driven-piston determining processing according to the first embodiment of the present invention.
{Fig. 6} FIG. 6 is a schematic view showing divided regions in the cylinder according to the first embodiment of the present invention.
{Fig. 7} FIG. 7 is a flow chart showing a flow of driven-piston determining processing according to the second embodiment of the present invention.

{Description of Embodiments}

One embodiment of a piston controller, a wind turbine generator, and a piston control method according to the present invention will be described below with reference to the drawings.

First Embodiment

A first embodiment of the present invention will be described below.

FIG. 1 is an external view of a wind turbine generator 10 according to this first embodiment.

The wind turbine generator 10 according to this first embodiment is interconnected with a utility grid for supplying generated power thereto and is installed at sea, for an example. The wind turbine generator 10 has a tower (support column) 14 erected upright on a foundation 12, a nacelle 16 installed at the top of the tower 14, and a rotor 18 provided on the nacelle 16 in a manner enabling rotation about a substantially horizontal axis.

A plurality of (for example, three in this embodiment) blades 20 are attached on the rotor 18 in a radiating pattern about the rotational axis thereof. Thus, the force of wind striking the blades 20 from direction of the rotational axis of the rotor 18 is converted to a motive force that rotates the rotor 18 about the rotational axis, and this motive force is converted to electrical power by a generator. Note that the blades 20 are coupled to the rotor 18 so as to be capable of rotating relative to the wind direction, so that the pitch angle of the blades 20 can be changed.

FIG. 2 is a schematic view showing the electrical configuration in the wind turbine generator 10 according to this first embodiment and the configuration for speeding up the rotation of the rotor 18 using hydraulic pressure and transmitting the rotation to a generator 29 (for example, a synchronous generator). The wind turbine generator 10 according to this first embodiment speeds up the rotation of the rotor 18 by means of a hydraulic driving device, which is configured with a cam 30 and a hydraulic pump 32, which are shown in FIG. 3, and a hydraulic motor 34, and transmits the rotation to the generator 29.

A rotor shaft 36 is provided on the rotor 18 towards the interior of the nacelle 16, and the circular cam 30, in which a plurality of peaks and valleys are alternately provided in the circumferential direction, is connected to the end of the rotor shaft 36.

The hydraulic pump 32, which pumps working fluid inside cylinders 40 by means of a plurality of corresponding pistons 38, is provided in the periphery of the cam 30.

The pistons 38 provided in the hydraulic pump 32 are disposed in a radiating pattern so as to contact the circumferential surface of the cam 30. Thus, the cam 30 rotates together with the rotation of the rotor 18, whereby the pistons 38 alternately contact the peaks and valleys of the cam 30. When the pistons 38 contact the peaks of the cam 30, the pistons 38 expel the working fluid out of the cylinders 40, and when the pistons 38 contact the valleys, the pistons 38 suck the working fluid into the cylinders 40.

Note that, in FIG. 3, cross-sections of some of the cylinders 40 and contact states between the pistons 38 and the cam 30 therein are illustrated, and illustrations of the contact states between the pistons 38 and the cam 30 for other cylinders 40 are omitted.

On the other hand, the hydraulic motor 34, which speeds up the rotation of the rotor 18 and transmits the rotation to the synchronous generator 29, is provided at the end of a shaft 42 of the synchronous generator 29. In other words, the hydraulic motor 34 is rotated by the working fluid pumped from the hydraulic pump 32 and rotationally drives the synchronous generator 29.

In the hydraulic motor 34, a plurality of cylinders is disposed in a radiating pattern centered on the shaft 42, and the pistons provided in the cylinders are connected to the shaft 42 via rods. Thus, in the hydraulic motor 34, the working fluid is pumped into the individual cylinders from the hydraulic pump 32 via a high-pressure manifold 44, whereby the pistons provided in the cylinders undergo reciprocating motion, causing the shaft 42 of the synchronous generator 29 to rotate. Also, the working fluid pushed out from the cylinders of the hydraulic motor 34 is returned to the hydraulic pump 32 via a low-pressure manifold 46.

The high-pressure manifold 44 is provided with an accumulator 48 that stores the working fluid that flows into and out of the hydraulic pump 32 and the hydraulic motor 34.

The generator 29 is rotationally driven to generate electric power, is connected to a busbar 50, to which other wind turbine generators 10 etc. are connected, via a boosting transformer 52, and is further connected to a utility grid 58 via an interconnection transformer 56. Thus, the wind turbine generator 10 is capable of supplying the generated powder output to the utility grid 58.

In addition, the wind turbine generator 10 is provided with a wind turbine controller 60 that controls the wind turbine generator 10. The wind turbine controller 60 consists of, for example, a CPU (Central Processing Unit), a RAM (Random Access Memory), a computer readable recording medium, and so forth. A processing sequence for implementing individual functions of a PI control unit 62, a torque command value creating unit 64, and a hydraulic control unit 66, described later, is, for example, stored in the recording medium etc. in the form of a program, and by loading this program into the RAM etc. and executing information processing and computation on the CPU, the individual functions are implemented.

In the wind turbine controller 60, a difference between a target rotor rotational speed indicating a target value for the rotational speed of the rotor 18 and the rotor rotational speed, which is the measured rotational speed of the rotor 18, is input to the PI control unit 62, and a blade-pitch-angle command value is created such that the rotational speed of the rotor 18 is equal to the target rotor rotational speed, and the blade-pitch-angle command value is output to a pitch actuator (not shown) that changes the pitch angles.

In addition, in the wind turbine controller 60, the torque command value creating unit 64 creates a torque command value in accordance with the rotor rotational speed, and outputs it to the hydraulic control unit 66 that controls the hydraulic pump 32 and the hydraulic motor 34. Note that table information including the optimal torque command values for the rotor rotational speeds is stored in the torque command value creating unit 64, and the torque command value creating unit 64 creates the torque command value according to the table information.

The hydraulic control unit 66 outputs the control command value for driving the hydraulic pump 32 and the hydraulic motor 34 to the hydraulic pump 32 and the hydraulic motor 34.

After receiving the torque command value, the hydraulic control unit 66 according to this first embodiment calculates a driving command value for the pistons configuring the hydraulic pump 32 (hereinafter referred to as "piston-driving command value") on the basis of the result obtained by dividing the allowable maximum torque output of the hydraulic pump 32 by the torque command value. The control command value including the piston-driving command value is input to the hydraulic pump 32. The hydraulic pump 32 drives the pistons 38 at the positions corresponding to the piston-driving command values, whereby the torque corresponding to the torque command value is output. Thus, by transmitting this torque to the generator 29 via the hydraulic motor 34 and the shaft 42, the generator 29 generates electric power. Note that the generated power output from the generator 29 is equal to the product of the torque and the rotational speed of the generator 29.

When the wind turbine generator 10 is operated under full load, all the pistons 38 provided in the hydraulic pump 32 are driven. Note that driving the pistons 38 herein means a state in which all valves (not shown) that control the flow of the working fluid into and out of the cylinders 40 are opened. These valves are provided on the pistons 38 (the cylinders 40), respectively, and opening and closing of the individual valves is controlled by the hydraulic control unit 66. On the other hand, in the case in which the rotational force of the rotor 18 is low and the wind turbine generator 10 is operated under partial load, only some of the pistons 38 that correspond to partial load are driven. In other words, the valves corresponding to the pistons 38 that are not driven are closed, and the working fluid is not allowed to flow into or out of the cylinders 40.

When the hydraulic pump 32 is driven under partial load, for example, if, as shown in FIG. 4, some of the pistons 38 to be driven are disposed evenly (at fixed intervals), by driving the mutually opposing pistons 38, a resonance vibration having a period equal to the product of the number of pistons 38 being driven and the rotational speed of the rotor 18 is caused. In the example shown in FIG. 4, the number of pistons 38 being driven (the pistons 38 surrounded by broken lines) is four, and in this case, the period of the resonance vibration becomes four times the rotational speed of the rotor 18.

Thus, when the hydraulic pump 32 is driven with some of the pistons 38 because the wind turbine generator 10 is operated under partial load, the hydraulic control unit 66 according to this first embodiment performs processing that virtually divides the positions at which the pistons 38 are disposed into a plurality of regions (hereinafter referred to as "divided regions") and determines the positions of the pistons 38 to be driven in every divided region such that the pistons 38 to be driven are not disposed at fixed intervals (hereinafter referred to as "driven-piston determining processing").

FIG. 5 is a flow chart showing a flow of processing of a program that is executed by the hydraulic control unit 66 when driven-piston determining processing according to the first embodiment is performed, and the processing is stored in the wind turbine controller 60 in advance. Note that the driven-piston determining processing is executed when the wind turbine generator 10 is operated under partial load. In other words, the driven-piston determining processing is not executed when the hydraulic pump 32 is operated under full load of the wind turbine generator 10. Note that whether the wind turbine generator 10 is operated under partial load is determined on the basis of, for example, the rotational speed of the rotor 18, the wind speed, and so forth.

First, in Step 100, the number of pistons 38 to be driven is determined on the basis of the result obtained by dividing the allowable maximum torque output of the hydraulic motor 34 by the torque command value. The number of pistons 38 to be driven is calculated by multiplying the result obtained by dividing the maximum torque by the torque command value, by the total number of pistons 38.

In the next Step 102, as shown in the example in FIG. 6, divided regions 70 are determined. The numbers of pistons 38 included in respective divided regions 70 are made substantially the same. Therefore, boundaries between the respective divided regions 70 have substantially equal intervals.

In addition, in this first embodiment, the number of divided regions 70 is made the same as the number of pistons 38 to be driven. As shown in FIG. 6, for example, if the total number of pistons 38 is thirty four, and if the number of pistons 38 to be driven is four, four divided regions 70 are set (divided regions 70-1 to 70-4). Then, a single piston 38 is driven for each divided region 70.

Note that, as shown in an example in FIG. 6, if the total number of pistons 38 cannot be divided by the number of pistons 38 to be driven without remainder, the remainder is added to a predetermined divided region 70. In other words, in the example shown in FIG. 6, the pistons 38 are divided into two divided regions 70 (the divided regions 70-2 and 70-3) including eight pistons 38 and two divided regions 70(the divided regions 70-1 and 70-4) including nine pistons 38.

Note that, the number of pistons 38 to be driven shown in FIG. 6 is merely an example, and the number is not limited to an even number; it may also be an odd number.

As described above, by virtually dividing the positions at which the pistons 38 are disposed into the plurality of divided regions 70 and respectively setting the positions of the pistons 38 to be driven for each of the divided regions 70, it is possible to prevent the positions of the pistons 38 to be driven from being biased in one direction.

By making the number of pistons 38 to be driven and the number of divided regions 70 the same, the number of types of variable used for determining the positions of the pistons 38 to be driven is reduced, whereby it is possible to determine the positions of the pistons 38 to be driven more easily. Note that the number of divided regions 70 may be different from the number of pistons 38 to be driven, and the number of divided regions 70 may be determined in advance.

In the next Step 104, the positions of the pistons 38 to be driven are respectively determined for the divided regions 70 using random numbers. In the example shown in FIG. 6, random numbers from 1 to 8 or from 1 to 9 are created for the divided regions 70, respectively, and the positions of the pistons 38 to be driven are determined in accordance with the created random numbers. Note that the positions of the pistons 38 are preset for the divided regions 70, respectively, in according with the values of the random numbers.

In addition, if the determined positions of the pistons 38 have fixed intervals, the positions of the pistons 38 to be driven may be redetermined.

In the next Step 106, a piston-driving command value corresponding to partial load is created. The piston-driving command value includes the positions of the pistons 38 to be driven.

In the next Step 108, the piston-driving command value is sent to the hydraulic pump 32.

In the next Step 110, it is determined whether or not the wind turbine generator 10 is operated under full load or stopped, and in the case of a negative judgment, the process advances to Step 112. On the other hand, in the case of an affirmative judgment, the wind turbine generator 10 is no longer in a state to be operated under partial load, and the process is terminated.

In Step 112, it is determined whether or not the rotational speed of the rotor 18 (the rotor shaft 36) is equal to a redetermining rotational speed at which the positions of the pistons 38 to be driven are predetermined, and in the case of an affirmative judgment, the process returns to Step 104 to redetermine the positions of the pistons 38, and in the case of a negative judgment, the process returns to Step 110.

As described above, in the driven-piston determining processing, the positions of the pistons 38 to be driven are respectively determined for each of the preset rotational speeds of the rotor 18. This processing is done because the determined positions of the pistons 38 to be driven may be biased within the area divided by the divided regions 70. In addition, if the pistons 38 to be driven remain the same pistons 38 over a long period of time, their lifetime is reduced relative to the non-driven pistons 38, and as a result, the maintainability of the wind turbine generator 10 is deteriorated. According to the driven-piston determining processing of this first embodiment, even if a bias is caused, because the pistons 38 to be driven are redetermined for every preset rotational speed of the rotor 18, it is possible to eliminate the bias in the positions of the pistons 38 to be driven and to equalize the lifetimes of the pistons 38. Note that the positions of the pistons 38 to be driven are preferably determined every revolution of the rotor 18.

As explained above, the wind turbine generator 10 according to this first embodiment is provided with the circular cam 30, in which a plurality of peaks and valleys are alternately provided in the circumferential direction and which is connected to the rotor shaft 36 of the rotor 18 provided with the blades 20, the hydraulic pump 32 that pumps the working fluid by the reciprocating motion of a plurality of the pistons 38, which are disposed in a radiating pattern so as to contact the circumferential surface of the cam 30, caused by the rotation of the rotor shaft 36, and the hydraulic motor 34 that rotates the shaft 42 of the generator 29 by the reciprocating motion of the plurality of pistons caused by the working fluid that has been pumped from the hydraulic pump 32. When hydraulic pump 32 is driven by some of the pistons 38 because the wind turbine generator 10 is operated under partial load, the hydraulic control unit 66 virtually divides the positions at which the pistons 38 are disposed into the plurality of divided regions 70 and determines the positions of the pistons 38 to be driven for the divided regions 70, respectively, such that the pistons 38 to be driven do not have fixed intervals.

Therefore, the wind turbine generator 10 according to this first embodiment can prevent the resonance vibration from being produced even when the hydraulic pump 32 is driven under partial load.

Second Embodiment

A second embodiment of the present invention will be described below.

Note that the configuration of the wind turbine generator 10 according to this second embodiment is similar to that of the wind turbine generator 10 according to the first embodiment shown in FIGs. 1 to 3, and a description thereof will be omitted.

FIG. 7 is a flow chart showing a flow of driven-piston determining processing according to this second embodiment. Note that steps in FIG. 7 that are same as the steps in FIG. 5 will be assigned the same reference numerals as those in FIG. 5, and a description thereof will be omitted partially or completely.

In Step 104' according to this second embodiment, the positions of the pistons 38 to be driven are determined for the divided regions 70, respectively, using mutually orthogonal spreading codes. The spreading codes have orthogonality and have low mutual correlation. Therefore, the driven-piston determining processing according to this second embodiment determines the positions of the pistons 38 to be driven using the spreading codes having low mutual correlation, whereby it is possible to prevent the pistons 38 to be driven from having fixed intervals with higher reliability.

Note that, in this second embodiment, a Gold code is used as the spreading code.

In Step 104', for example, the positions of the pistons 38 to be driven are determined using the same number of Gold codes as the number of pistons 38 to be driven in the divided regions 70.

Note that the number of divided regions 70 may be equal to the number of pistons 38 to be driven, which has been determined in Step 100, or may be set as a number of divided regions 70 that is set in advance. If the number of divided regions 70 set in advance is smaller than the number of pistons 38 to be driven, a plurality of pistons 38 to be driven will be positioned in a divided region 70.

Third Embodiment

A third embodiment of the present invention will be described below.

Note that the configuration of the wind turbine generator 10 according to this third embodiment is similar to that of the wind turbine generator 10 according to the first embodiment shown in FIGs. 1 to 3, and a description thereof will be omitted.

A flow of the driven-piston determining professing according to this third embodiment is similar to that of the driven-piston determining processing according to the second embodiment. However, in Step 104' according to this third embodiment, an M-sequence code (also referred to as M-sequence signal) expressed by equation (1) is used as the spreading code.

$$x_n = a_1 x_{n-1} + a_2 x_{n-2} + \ldots + a_i x_{n-i} + \ldots + a_p x_{n-p}$$

$$a_p = 0 \text{ or } 1 \quad (1)$$

In Step 104', for example, an M-sequence code in which n = 1 is used in a first divided region 70, an M-sequence code in which n = 2 is used in a second divided region 70, and an M-sequence code in which n = N is used in an Nth divided region 70, thereby determining the positions of the pistons 38 to be driven.

Note that the number of divided regions 70 may be equal to the number of pistons 38 to be driven, which has been determined in Step 100, or may be set as a number of divided regions 70 that is set in advance. If the number of divided regions 70 set in advance is smaller than the number of pistons 38 to be driven, a plurality of pistons 38 to be driven will be positioned in a divided region 70.

Although the present invention has been described above using the individual embodiments described above, the technical scope of the present invention is not limited to the scope stated in the embodiments described above. carious modifications and improvements can be made to the individual embodiments described above, so long as they do not depart from the spirit of the invention, and other forms in which such modifications or improvements are made are also encompassed by the technical scope of the present invention.

For example, in the individual embodiments described above, a description has been given of a form in which the driven-piston determining processing is performed on the hydraulic pump 32 when the wind turbine generator 10 is operated under partial load; however, the present invention is not limited thereto, and a form in which the driven-piston determining processing may be performed on the hydraulic motor 34 is also permitted. Alternatively, a form in which the driven-piston determining processing may be performed on both the hydraulic pump 32 and the hydraulic motor 34 is also permitted.

In addition, in the second and third embodiments described above, a description has been given of a form in which a Gold code and an M-sequence code are used as the spreading code; however, the present invention is not limited thereto, and a code other than a Gold code and an M-sequence code may be used as the spreading code.

In addition, the flow of the driven-piston determining processing described in the above-mentioned individual embodiments is also merely an example; unnecessary steps may be removed, new steps may be added, and the order of the processes may be changed, so long as they do not depart from the spirit of the present invention.

{Reference Signs List}

| | |
|---|---|
| 10 | wind turbine generator |
| 18 | rotor |
| 20 | blade |
| 29 | generator |
| 30 | cam |
| 32 | hydraulic pump |
| 34 | hydraulic motor |
| 36 | rotor shaft |
| 38 | piston |
| 66 | hydraulic control unit |
| 70 | divided regions |

**Claims**

1.  A piston controller of a hydraulic driving device including a circular cam (30), in which a plurality of peaks and valleys are alternately provided in a circumferential direction and which is connected to a shaft (36) and a hydraulic pump (32) that pumps working fluid by a reciprocating motion of a plurality of pistons (38), which are disposed in a radiating pattern so as to contact the circumferential surface of the cam (30), caused by rotation of the shaft (36),
    wherein, when the hydraulic pump (32) is driven by means of some of the pistons (38), the piston controller virtually divides positions at which the pistons (38) are disposed into a plurality of regions (70) and determines positions of the pistons (38) to be driven for each of the regions (70) such that the pistons (38) to be driven do not have fixed intervals.

2.  The piston controller according to Claim 1, wherein the number of pistons (38) to be driven and the number of regions (70) are the same.

3.  The piston controller according to Claim 1 or 2, wherein positions of the pistons (38) to be driven are determined for every preset rotational speed of the shaft (36).

4.  The piston controller according to any one of Claims 1 to 3, wherein positions of the pistons (38) to be driven are determined for each of the regions using a random number.

5.  The piston controller according to any one of Claims 1 to 3, wherein positions of the pistons (38) to be driven are determined for each of the regions using a spreading code.

6.  A wind turbine generator comprising:

    a circular cam (30), in which a plurality of peaks and valleys are alternately provided in a circumferential direction and which is connected to a shaft (36) of a motor provided with blades (20);
    a hydraulic pump (32) that pumps working fluid by a reciprocating motion of a plurality of pistons (38), which are disposed in a radiating pattern so as to contact the circumferential surface of the cam (30), caused by rotation of the shaft (36) of the rotor;
    a hydraulic motor (34) that rotates a shaft (42) of a generator (29) by a reciprocating motion of a plurality of pistons caused by the working fluid that has been pumped from the hydraulic pump (32); and
    the piston controller according to any one of Claims 1 to 5.

7.  The wind turbine generator according to Claim 6, wherein when the wind turbine generator is operated under partial load, the piston controller virtually divides positions at which the pistons provided in at least one of the hydraulic pump (32) and the hydraulic motor (34) are disposed into a plurality of regions and determines positions of the pistons to be driven for each of the regions such that the pistons to be driven do not have fixed intervals.

8.  A piston control method of a hydraulic driving device including: a circular cam (30), in which a plurality of peaks and valleys are alternately provided in a circumferential direction and which is connected to a shaft (36) and a hydraulic pump (32) that pumps working fluid by a reciprocating motion of a plurality of pistons (38), which are disposed in a radiating pattern so as to contact the circumferential surface of the cam (30), caused by rotation of the shaft (36),
    wherein when the hydraulic pump (32) is driven by means of some of the pistons (38), the piston control method virtually divides positions at which the pistons (38) are disposed into a plurality of regions (70) and determines positions of the pistons (38) to be driven for each of the regions (70) such that the pitons (38) to be driven do not have fixed intervals.

# FIG. 1

FIG. 2

BLADE-PITCH-ANGLE
COMMAND VALUE

CONTROL
COMMAND
VALUE

CONTROL
COMMAND
VALUE

TARGET ROTOR
ROTATIONAL
SPEED

PI CONTROL
UNIT

TORQUE
COMMAND
VALUE

TORQUE COMMAND
VALUE CREATING
UNIT

ROTOR
ROTATIONAL
SPEED

HYDRAULIC
CONTROL UNIT

WIND TURBINE CONTROLLER

EP 2 623 779 A2

FIG. 3

FIG. 4

## FIG. 5

START

DETERMINE NUMBER OF
PISTONS TO BE DRIVEN — S100

DETERMINE DIVIDED REGIONS — S102

DETERMINE POSITIONS
OF PISTONS TO BE DRIVEN
USING RANDOM NUMBERS — S104

CREATE PISTON-DRIVING
COMMAND VALUE IN ACCORDANCE
WITH PARTIAL LOAD — S106

SEND PISTON-DRIVING COMMAND
VALUE TO HYDRAULIC PUMP — S108

S110

FULL LOAD OPERATION
OR HALTED? — YES

NO

S112

IS ROTATIONAL
SPEED OF ROTOR EQUAL TO
REDETERMINING ROTATIONAL
SPEED?

NO

YES

END

# FIG. 6

FIG. 7

```
                    ┌─────────────┐
                    │    START    │
                    └──────┬──────┘
                           │
              ┌────────────▼────────────┐
              │   DETERMINE NUMBER OF   │────S100
              │   PISTONS TO BE DRIVEN  │
              └────────────┬────────────┘
                           │
              ┌────────────▼────────────┐
              │ DETERMINE DIVIDED REGIONS│────S102
              └────────────┬────────────┘
                           │
              ┌────────────▼────────────┐
              │  DETERMINE POSITIONS OF │────S104'
              │   PISTONS TO BE DRIVEN  │
              └────────────┬────────────┘
                           │
              ┌────────────▼────────────┐
              │   CREATE PISTON-DRIVING │
              │ COMMAND VALUE IN ACCORDANCE│──S106
              │     WITH PARTIAL LOAD   │
              └────────────┬────────────┘
                           │
              ┌────────────▼────────────┐
              │ SEND PISTON-DRIVING COMMAND│──S108
              │  VALUE TO HYDRAULIC PUMP │
              └────────────┬────────────┘
```

S110

FULL LOAD OPERATION OR HALTED? — YES

NO

S112

IS ROTATIONAL SPEED OF ROTOR EQUAL TO REDETERMINING ROTATIONAL SPEED?

NO

YES

END

**EP 2 623 779 A2**

## REFERENCES CITED IN THE DESCRIPTION

### Patent documents cited in the description

- JP 2006299822 A